# EUROPÄISCHE PATENTANMELDUNG

(11) **EP 3 466 594 A1**
(43) Veröffentlichungstag der Anmeldung: **10.04.2019**
(21) Anmeldenummer: 18193552.9
(22) Anmeldetag: 10.09.2018
(51) Int. Cl.: B23K 11/11, B23K 11/31

(54) **SCHWEISSZANGE**

(30) Priorität: 22.09.2017 DE 102017122049
(71) Anmelder: WITTENSTEIN SE, 97999 Igersheim (DE)
(72) Erfinder: Burger, Tobias, 97999 Igersheim (DE); Wilhelm, Thomas, 97993 Creglingen-Reinsbronn (DE)
(74) Vertreter: Zimmermann & Partner Patentanwälte mbB

(57) **Zusammenfassung**

Schweißzange (1), insbesondere X- Schweißzange (1) zum Widerstandspunktschweißen, mit einem ersten Zangenarm (11), einem zweiten Zangenarm (12), und einem Antrieb (2) umfassend einen Motor (4) und ein Getriebe (6) zum Drehen des ersten Zangenarmes (11) relativ zu dem zweiten Zangenarm (12) um eine Drehachse (14) der Schweißzange (1), wobei der Motor (4) und das Getriebe (6) koaxial angeordnet sind der zweite Zangenarm (12) in einer Widerlagerebene (29) an dem Gehäuse befestigt ist, welche Motor-seitig einer äußeren Abtriebslagerebene des Antriebs (2) angeordnet ist..

## Beschreibung

### Gebiet der Erfindung

Die Erfindung betrifft eine Schweißzange nach dem Oberbegriff des Anspruchs 1 und einer Verwendung nach dem nebengeordneten Anspruch.

### Stand der Technik

Schweißzangen zum Widerstandspunktschweißen werden typischerweise als sogenannte X-Schweißzangen oder X-Typ-Schweißzangen ausgeführt. Solche Schweißzangen verfügen über zwei Zangenarme, an welchen Elektroden für das Widerstandspunktschweißen angeordnet sind. Der Name X-Schweißzange rührt daher, dass auch heute noch gebräuchliche X-Schweißzangen Zangenarme aufweisen, welche über den Drehpunkt hinaus verlängert sind, um auf der den Elektroden abgewandten Seite eine Kinematik zum Antrieb der X- Schweißzangen anzuordnen.

Für die Öffnungs- und Schließbewegung der Schweißzange muss ein Antrieb vorgesehen werden, welcher bei X-Schweißzangen in Bezug auf das Gewicht sowie den räumlichen Platzbedarf Einschränkungen für die Ausgestaltung der X-Schweißzange nach sich zieht. Um solche Nachteile zu vermeiden, ist aus dem Stand der Technik eine X-Schweißzange bekannt, welche einen Antrieb aufweist, der unmittelbar im Drehpunkt der Schweißzange ansetzt.

Aus der Offenlegungsschrift DE 10 2011 054 376 A1 ist eine motorgetriebene X-Schweißzange für das Widerstandsschweißen bekannt, welche einen Motor aufweist, der über ein Untersetzungsgetriebe einen ersten Zangenarm der Schweißzange relativ zu einem zweiten Zangenarm verdrehen kann. Allerdings kann auch diese bereits gegenüber anderen aus dem Stand der Technik bekannten Schweißzangen verkleinerte Schweißzange für bestimmte Einbau- oder Anwendungssituationen zu große Abmessungen aufweisen.

### Offenbarung der Erfindung

Aufgabe der Erfindung ist es, X-Schweißzangen zum Widerstandspunktschweißen, die aus dem Stand der Technik bekannt sind, zu verbessern. Insbesondere soll eine Schweißzange angegeben werden, welche einen einfachen und kompakten Aufbau aufweist.

Die Aufgabe wird mit einer Schweißzange, insbesondere einer X-Schweißzange zum Widerstandspunktschweißen nach dem Anspruch 1 und einer Verwendung nach dem nebengeordneten Verwendungsanspruch gelöst.

Ein erster Aspekt der Erfindung betrifft eine Schweißzange, insbesondere X-Schweißzange zum Widerstandspunktschweißen, mit einem ersten Zangenarm, einem zweiten Zangenarm, und einem Antrieb aufweisend einen Motor und ein Getriebe zum Drehen des ersten Zangenarmes relativ zu dem an einem Gehäuse des Antriebs fixiert befestigten zweiten Zangenarm um eine Drehachse der Schweißzange, wobei der Motor und das Getriebe koaxial in der Drehachse angeordnet sind, wobei der zweite Zangenarm in einer Widerlagerebene an dem Gehäuse befestigt ist, welche Motor-seitig einer äußeren Abtriebslagerebene des Antriebs angeordnet ist.

Bei typischen Ausführungsformen der Schweißzange ist der Antrieb koaxial ausgeführt. Das bedeutet insbesondere, dass der Motor und das Getriebe des Antriebs zum Drehen des ersten Zangenarms relativ zu dem zweiten Zangenarm koaxial angeordnet sind. Koaxial bedeutet insbesondere, dass die Abtriebswelle des Motors koaxial zu einem Abtriebselement des Getriebes angeordnet ist. Vorzugsweise sind der Motor und das Getriebe koaxial in einer Drehachse angeordnet, um welche sich der erste Zangenarm relativ zu dem zweiten Zangenarm bei Betätigen des Antriebs dreht. Das Anordnen von Motor und Getriebe koaxial in der Drehachse bietet den Vorteil eines besonders kompakten Aufbaus. Um einen solchen besonders kompakten Aufbau weiter zu verbessern oder zu optimieren, kann eine Abtriebswelle des Motors oder ein mit der Abtriebswelle des Motors verbundenes Abtriebselement in das Getriebe hineingreifen. Dies ist insbesondere bei Koaxialgetrieben oder bei Getrieben mit Kurvenscheibe möglich, welche über einen innen liegenden Antrieb verfügen, bspw. mit angetriebener Kurvenscheibe. Ein Beispiel für ein solches Koaxialgetriebe ist ein Planetengetriebe, bei welchem das Sonnenrad von dem Motor angetrieben wird. Weitere Beispiele für Getriebe, welche im Zusammenhang mit der Erfindung verwendet werden, sind Koaxialgetriebe mit einer Kurvenscheibe als Antriebselement. Ein weiteres bevorzugtes Beispiel ist ein Spannungswellengetriebe, ein Beispiel für ein solches Getriebe ist unter dem Markennamen Harmonic Drive bekannt. Bei Ausführungsformen kommen Zykloidgetriebe als Getriebe mit innenliegender Kurvenscheibe zum Einsatz. Zykloidgetriebe umfassen außen liegende, fixierte Bolzen in einer Kreisanordnung, analog zu den Innenzahnrädern der anderen Kurvenscheibengetriebe.

Getriebe mit hoher Übersetzung werden in Ausführungsformen verwendet, um hohe Drehmomente bereitzustellen. Besondere Vorteile bietet ein Koaxialgetriebe mit einer Kurvenscheibe zum Antrieb radial beweglicher Zähne, welche in einem Zahnträger aufgenommen sind. Ein beispielhafter Aufbau für ein solches Getriebe kann beispielsweise der Anmeldung DE 10 2015 105 525 A1 entnommen werden. Solche Getriebe werden hierin auch als Galaxiegetriebe bezeichnet und bieten den Vorteil einer hohen Drehmomentdichte bei äußerst kompaktem Aufbau und extremen Übersetzungsverhältnissen. Diese Eigenschaften machen sie für die Anwendung in Schweißzangen besonders vorteilhaft.

Allgemein weisen bevorzugte Getriebe für typische Ausführungsformen von Schweißzangen ein Koaxialgetriebe mit einem Innenzahnkranz auf. Der Innenzahnkranz ist vorzugsweise fest mit einem Gehäuse des Getriebes oder des Antriebs verbunden. Bei Koaxialgetrieben mit radial beweglichen Zähnen ist vorzugsweise ein Zahnträger, in welchem die Zähne radial beweglich angeordnet sind, mit einem Abtriebselement des Getriebes oder des Antriebs der Schweißzange verbunden. Dies bewirkt einen besonders kompakten Aufbau.

Typische Ausführungsformen der Erfindung umfassen mehrere Getriebestufen, beispielsweise eine erste Getriebestufe und eine zweite Getriebestufe. Die hierin genannten Beispiele für einstufige Getriebe wie bspw. Koaxialgetriebe in verschiedenen Ausführungen werden typischerweise als erste Getriebestufe oder zweite Getriebestufe eingesetzt. Ein typisches Beispiel eines Getriebes eines Antriebs einer Ausführungsform der Erfindung umfasst ein Planetengetriebe als erste Getriebestufe, d.h. eine Planetenvorstufe, und ein Koaxialgetriebe mit Kurvenscheibe und radial verschieblich gelagerten Zähnen bzw. ein Galaxiegetriebe als zweite Getriebestufe. Typischerweise weist die erste Stufe eine Übersetzung mindestens 2:1 oder 3:1 oder eine Übersetzung von höchstens 9:1 oder höchstens 10:1 auf und die zweite Stufe eine Übersetzung von mehr als 10:1 oder mindestens 16:1. Weitere Ausführungsformen weisen zwei Planetengetriebe oder zwei Galaxiegetriebe als zwei Getriebestufen auf.

Vorzugsweise sind der Motor und das Getriebe in einem gemeinsamen Gehäuse angeordnet. Dabei bedeutet der Ausdruck "gemeinsames Gehäuse" insbesondere, dass Getriebe und Motor keine eigenen Einheiten mit beispielsweise hervorstehenden Wellen, insbesondere keine aus einem Gehäuse hervorstehende Abtriebswelle des Motors oder keine aus einem Gehäuse des Getriebes hervorstehende Antriebswelle des Getriebes aufweisen. Bei Ausführungsformen ist die Welle zwischen Motor und Getriebe einteilig oder Kupplungs-los aufgebaut, um einen kompakten Aufbau zu ermöglichen. Vorzugsweise ist das Gehäuse zumindest zweiteilig, bspw. mit einem Motorgehäuseteil und einem Getriebegehäuseteil aufgebaut, wobei die zweiteilige Trennung des Gehäuses des Antriebs entlang einer Ebene verläuft, welche zwischen Motor und Getriebe liegt. Typischerweise ist in dem Getriebegehäuseteil das Getriebe und in dem Motorgehäuseteil der Motor untergebracht. Dies ermöglicht ein Anschrauben von verschiedenen Motorbaugrößen an ein Getriebe, um Modularschweißzangen unterschiedlicher Größe und Stärke oder Geschwindigkeit herzustellen. Bei Ausführungsformen schließt das Getriebegehäuseteil des Getriebes unmittelbar an das Motorgehäuseteil an, um einen kompakten und modularen Aufbau zu erreichen. An dem Motorgehäuseteil oder an dem Getriebegehäuseteil kann der zweite Zangenarm fixiert befestigt sein. Bei weiteren typischen Ausführungsformen ist zwischen dem Motorgehäuseteil und dem Getriebegehäuseteil ein Flansch angeordnet, an welchem der zweite Zangenarm mittelbar oder unmittelbar befestigt ist. Dies ermöglicht einen kompakten, stabilen und modularen Aufbau.

Bei typischen Ausführungsformen ist ein Abtriebselement des Getriebes zweifach gelagert. Bei Ausführungsformen mit einem Galaxie-Getriebe als zweite Getriebestufe oder als einzige Getriebestufe ist typischerweise ein Zahnträger des Galaxie-Getriebes, in welchem Zähne radial verschieblich aufgenommen sind, als Abtriebselement ausgebildet und zweifach gelagert. Das bedeutet insbesondere, dass das Abtriebselement zwei Lagerebenen aufweist, welche senkrecht zur Richtung der Drehachse sind und in Richtung der Drehachse versetzt sind. Vorzugsweise ist ein Innenzahnkranz eines Koaxialgetriebes als Getriebe des Antriebs zwischen einem äußeren Abtriebslager und einem inneren Abtriebslager angeordnet. Oder anders ausgedrückt sind das innere Abtriebslager und das äußere Abtriebslager axial beidseitig des Innenzahnkranzes des Planetengetriebes oder des Galaxie-Getriebes angeordnet. Das bedeutet insbesondere, dass der Innenzahnkranz zwischen zwei Lagerebenen eines Abtriebselements des Getriebes angeordnet ist. Das Abtriebselement kann beispielsweise einen Zahnträger eines Getriebes mit Kurvenscheibe zum Antrieb radial beweglicher Zähne umfassen oder einen zweifach gelagerten Planetenträger. Ein Beispiel für ein solches Planetengetriebe ist der EP 0 824 640 B1 zu entnehmen. Bei einem Getriebe mit Kurvenscheibe zum Antrieb radial beweglicher Zähne (Galaxie-Getriebe) umfasst das Abtriebselement den Zahnträger, in welchem die Zähne radial beweglich aufgenommen sind, wobei der Zahnträger des Abtriebselements vorzugsweise beidseitig der Ebene der Kurvenscheibe und der radial beweglichen Zähne gelagert ist. Das Motor-abgewandte Lager wird dabei als äußeres Abtriebslager bezeichnet.

Vorzugsweise ist der erste Zangenarm über ein Lager des Getriebes drehbar um die Drehachse gelagert. Besonders bevorzugt wird, dass der erste Zangenarm ausschließlich über Lager des Getriebes drehbar um die Drehachse gelagert ist. Auf diese Weise werden zusätzliche Lager überflüssig. Bei besonders großen oder hoch beanspruchten Schweißzangen kann auch zusätzlich ein weiteres Lager vorgesehen werden, insbesondere ein Lager auf der dem Antrieb abgewandten Seite des ersten Zangenarmes. Bei bevorzugten Ausführungsformen ist der erste Zangenarm mit dem Abtriebselement des Getriebes verbunden, sodass der erste Zangenarm über die Abtriebslager des Getriebes gelagert ist. Insbesondere bei Getrieben mit Abtriebselementen, welche ein zwischen den Abtriebslagern angeordnetes Innenzahnrad aufweisen, beispielsweise Planetengetriebe oder in dieser Anmeldung beschriebene Koaxialgetriebe, wird auf diese Weise ein ausreichend großer Hebelarm zur Lagerung des ersten Zangenarms erreicht.

Bei typischen Ausführungsformen der Schweißzange ist der erste Zangenarm ausschließlich über Abtriebslager des Getriebes gelagert. Dies bedingt einen besonders kompakten Aufbau und ermöglicht eine präzise Ausrichtung der Zangenarme, insbesondere orthogonal zur Drehachse des Antriebs.

Der kompakte Aufbau typischer Ausführungsformen von Schweißzangen macht es möglich, dass typische Schweißzangen ein Ausgleichslager, einen Ausgleichsantrieb oder ein Ausgleichsmechanismus zur Verringerung von Belastungen, beispielsweise einer Befestigungskonsole oder eines Roboters, aufweisen. Diese können bei Ausführungsformen ebenfalls am Flansch befestigt werden oder es kann ein zusätzlicher Flansch zur Befestigung solcher Einrichtungen am Gehäuse des Antriebs vorgesehen werden.

Vorteilhafterweise weist der erste Zangenarm eine Stufe in Richtung des Antriebs auf. Bei typischen Ausführungsformen sind die Zangenarme orthogonal zur Drehachse ausgerichtet. Zumindest der erste Zangenarm, bevorzugt nur der erste Zangenarm, weist bei bevorzugten Ausführungsformen eine Stufe auf, welche bewirkt, dass die Ebene, in welcher sich eine Elektrode des ersten Zangenarms bewegt, versetzt ist gegenüber der Ebene oder dem Bereich, in welchem der erste Zangenarm mit einem Abtriebselement des Getriebes verbunden ist. Auf diese Weise kann erreicht werden, dass die Arbeitsebene, das ist die Ebene, in welcher sich die Elektrode des ersten Zangenarms bewegt und in welcher der Arbeitspunkt ist, gegenüber dem Abtrieb des Antriebs in Richtung des Motors versetzt ist. Auf diese Weise wird die Arbeitsebene entlang der Drehachse in Richtung des Antriebs oder des Motors gegenüber der Ebene, in welcher der erste Zangenarm an dem Abtriebselement befestigt ist, verschoben.

Vorzugsweise sind die Zangenarme derart ausgebildet oder ist zumindest ist die Stufe des ersten Zangenarmes so ausgebildet, dass ein Arbeitspunkt oder eine Schweißebene der Schweißzange Motor-seitig einer Lagerebene eines äußeren Abtriebslagers des Getriebes liegt. Diese Lagerebene ist eine zur Drehachse senkrechte, durch ein äußeres Abtriebslager des Getriebes verlaufende Ebene. Die Lagerebene bezeichnet dabei die Ebene, in welcher die radialen Lagerkräfte wirken, beziehungsweise in welcher der Schwerpunkt der radialen Lagerkräfte liegt, beispielsweise bei Wälzlagern. Der Arbeitspunkt ist vorzugsweise der Punkt, an welchem ein Widerstandspunktschweißen stattfindet.

Bei typischen Ausführungsformen liegt der Arbeitspunkt der Schweißzange oder die Arbeitsebene der Schweißzange Motor-seitig einer zur Drehachse senkrechten, durch ein inneres Abtriebslager des Getriebes verlaufenden Ebene. Bei weiteren Ausführungsformen liegt die Arbeitsebene Motor-seitig einer Ebene, welche durch einen Innenzahnkranz eines Koaxialgetriebes der ersten Getriebestufe oder durch einen Innenzahnkranz eines Koaxialgetriebes der zweiten Getriebestufe gebildet wird. Solche Ausführungsformen bieten den Vorteil einer besonders günstigen Gewichtsverteilung.

Ein weiterer unabhängiger Aspekt der Erfindung betrifft eine Verwendung einer Schweißzange in einer der beschriebenen typischen oder bevorzugten Ausführungsformen zum Schweißen von Blech, insbesondere auch aus Aluminium oder aus Stahl oder allgemein einer Metalllegierung. Insbesondere beim Schweißen von Blech, beispielsweise in der Herstellung von Kraftfahrzeugen oder in der Herstellung von Teilen des allgemeinen Maschinenbaus, bietet die Schweißzange Vorteile, da sie kompakt, stabil und kräftig ist, wobei außerdem mit der gewählten Motor-Getriebekombination hohe Arbeitsgeschwindigkeiten erreicht werden können.

Bei typischen Ausführungsbeispielen ist der zweite Zangenarm in einer Widerlagerebene an dem Gehäuse befestigt, welche Motor-seitig einer äußeren Abtriebslagerebene des Antriebs angeordnet ist. Der zweite Zangenarm kann auf einer beliebigen Seite, beispielsweise links oder rechts des Antriebs angeordnet sein.

Typischerweise bildet die Stufe des ersten Zangenarmes einen Versatz, so dass ein Arbeitspunkt und damit auch die Arbeitsebene der Schweißzange Motor-seitig einer Befestigungsebene des ersten Zangenarmes liegen.

Typischerweise fällt der Arbeitspunkt im Wesentlichen in die Widerlagerebene. Dabei kann "im Wesentlichen" beispielsweise bedeuten, dass der Abstand des Arbeitspunktes zur Widerlagerebene weniger als 40% oder weniger als 20% oder weniger als 10% der Länge des Antriebs oder weniger als 50% oder weniger als 30% oder weniger als 20% des Versatzes der Stufe des ersten Zangenarmes beträgt. "Im Wesentlichen" kann beispielsweise auch bedeuten, dass der Abstand zwischen der Arbeitsebene, in welcher der Arbeitspunkt liegt, und der Widerlagerebene kleiner ist als die Dicke des zweiten Zangenarmes. Mit der Widerlagerebene wird typischerweise die Ebene bezeichnet, welche durch die Anlagefläche des zweiten Zangenarmes an einem Flansch oder an einer anderen Befestigungsfläche des Antriebs definiert wird.

Typischerweise ist der erste Zangenarm über zumindest ein in einer Abtriebslagerebene liegendes Abtriebslager des Getriebes drehbar um die Drehachse gelagert. Typischerweise sind zwei Abtriebslager in einer inneren, Motor-näheren, Abtriebslagerebene und in einer äußeren, Motor-entfernteren Abtriebslagerebene vorgesehen. Typischerweise fällt die innere Abtriebslagerebene im Wesentlichen mit der Arbeitsebene zusammen. Bei weiteren Ausführungsformen ist die innere Abtriebslagerebene entfernt von der Arbeitsebene. Bei typischen Ausführungsformen ist die erste Getriebestufe zumindest teilweise Motor-seitig der inneren Abtriebslagerebene vorgesehen. Bei weiteren Ausführungsformen ist die erste Getriebestufe auf der Motorentfernten Seite der inneren Abtriebslagerebene vorgesehen.

Typischerweise ist der zweite Zangenarm stufenlos ausgebildet. Dadurch wird der Aufbau vereinfacht. Bei weiteren Ausführungsformen weist der zweite Zangenarm eine Stufe auf. Bei Ausführungsformen mit Stufe des zweiten Zangenarms ist der Versatz der Stufe des zweiten Zangenarms maximal 50% oder maximal 30% so groß wie der Versatz der Stufe des ersten Zangenarms. Auf diese Weise wird der zweite Zangenarm kompakter und leichter gegenüber anderen Ausführungsformen aus dem Stand der Technik.

Bei typischen Ausführungsformen ist das Größenverhältnis der Durchmesser des Getriebegehäuseteils zu dem Motorgehäuseteil mindestens 0,6: 1 oder mindestens 0,7:1 oder mindestens 0,8:1 oder höchstens 1:1 oder höchstens 1,2:1 oder höchstens 1,4:1. Die Erfindung kann beispielsweise die folgenden Vorteile bieten: kompaktere Konstruktion, insbesondere in Längsrichtung der Drehachse, symmetrischer Aufbau, höhere Leistungsdichte, höhere Steifigkeit, weniger Bauteile, besseren Kraftfluss, weniger Aufwand bei der Montage, weniger Aufwand bei der Vermessung und Ausrichtung der Zangenarme oder eine verringerte Störkontur.

### Kurze Beschreibung der Zeichnungen

- Fig. 1: zeigt eine schematische Draufsicht auf eine beispielhafte Ausführungsform einer Schweißzange;
- Fig. 2: zeigt die Schweißzange der Fig. 1 in einer schematischen Seitenansicht;
- Fig. 3: zeigt eine schematische Schnittzeichnung durch die Schweißzange der Fig. 1 und 2.

### Beschreibung von Ausführungsbeispielen

Nachfolgend werden typische Ausführungsbeispiele beschrieben, wobei für gleiche oder ähnliche Teile teilweise gleiche Bezugszeichen verwendet werden, teilweise auch für mehrere verschiedene Ausführungsformen. Grundsätzlich ist die Anmeldung nicht auf die verschiedenen Ausführungsformen beschränkt, der Umfang wird vielmehr durch die Ansprüche bestimmt. Teilweise werden Einzelteile lediglich im Zusammenhang mit einer Figur erläutert, soweit diese Teile in weiteren Figuren dargestellt sind, werden sie nicht unbedingt noch einmal beschrieben.

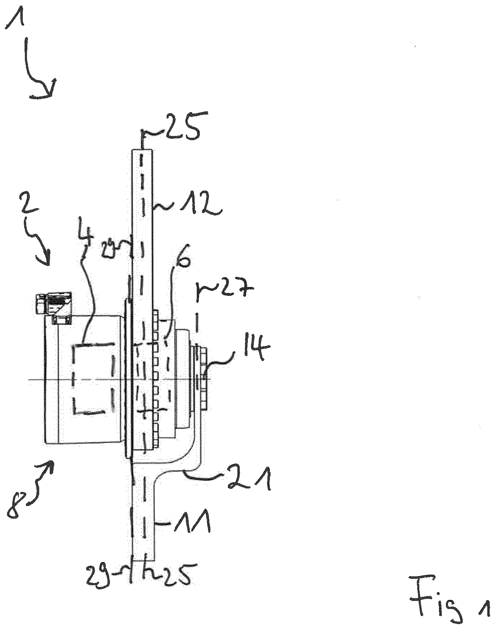

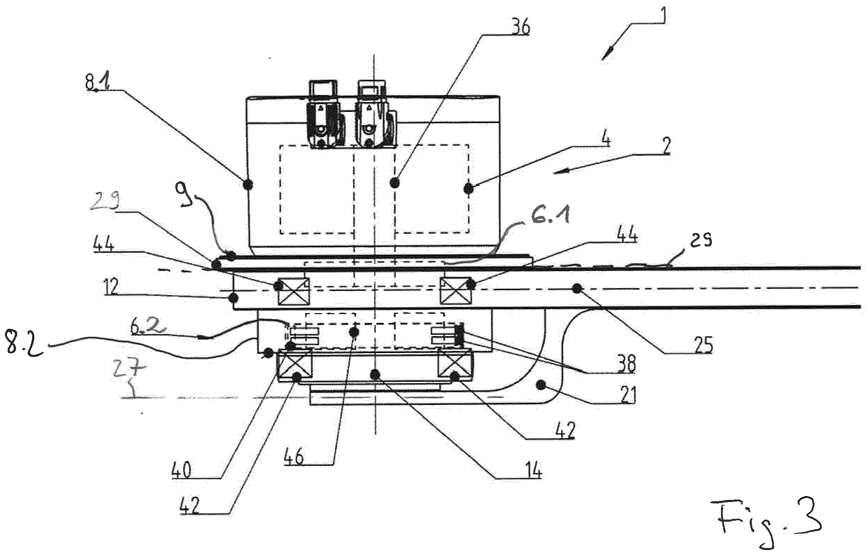

In der Fig. 1 ist ein Ausführungsbeispiel einer Schweißzange 1 in einer schematischen Draufsicht gezeigt. Die Schweißzange 1 der Fig. 1 ist eine sogenannte X-Schweißzange zum Widerstandspunktschweißen insbesondere von Blech, beispielsweise Flachstahl für den Automobilbau. Die Schweißzange 1 umfasst einen Antrieb 2, welcher einen Motor 4 und ein Getriebe 6 umfasst. Der Motor 4 und das Getriebe 6 sind lediglich schematisch strichliert gezeigt, da sie innerhalb eines gemeinsamen Gehäuses 8 angeordnet sind. Das gemeinsame Gehäuse 8 ist zweiteilig ausgeführt, es umfasst beispielsweise bei Ausführungsformen (siehe Fig. 3) ein Motorgehäuseteil und ein Getriebegehäuseteil, wobei zwischen dem Motorgehäuseteil und dem Getriebegehäuseteil ein Flansch angeordnet ist.

Der Motor und das Getriebe müssen nicht zwangsläufig ausschließlich in den jeweiligen Gehäuseteilen und angeordnet sein, es kann bei Ausführungsformen auch vorkommen, dass Teile des Motors oder des Getriebes jeweils in das andere Gehäuseteil hineinragen.

Die Schweißzange 1 weist einen ersten Zangenarm 11 und einen zweiten Zangenarm 12 auf. Der erste Zangenarm 11 ist mit einem Abtriebselement des Getriebes 6 verbunden, sodass mit dem Antrieb 2 der erste Zangenarm 11 um eine Drehachse 14 der Schweißzange 1 verdreht werden kann. Der Motor 4 und das Getriebe 6 sind koaxial zueinander angeordnet. Weiterhin sind der Motor 4 und das Getriebe 6 auch koaxial zur Drehachse 14 der Schweißzange 1 angeordnet, sodass sich hier ein äußerst kompakter Aufbau ergibt.

Der zweite Zangenarm 12 ist fixiert mit dem Gehäuse 8 des Antriebs 2 verbunden, sodass der zweite Zangenarm 12 ortsfest bezüglich eines Koordinatensystems des Antriebs 2 verbleibt. Der zweite Zangenarm 12 ist an dem Flansch 9 befestigt, wobei an der Grenzfläche zwischen dem Flansch 9 und dem Zangenarm die Widerlagerebene 29 definiert wird.

Mit dem zweiten Zangenarm ist bei typischen Ausführungsformen einstückig oder separat eine Konsole ausgebildet, welche eine Befestigung der Schweißzange an einem Roboter ermöglicht. Bei weiteren typischen Ausführungsformen ist der zweite Zangenarm direkt an einer Konsole befestigt. Bei weiteren typischen Ausführungsformen ist der zweite Zangenarm nicht an der Konsole befestigt, vielmehr kann beispielsweise ein zusätzlicher Flansch am Gehäuse vorgesehen sein, um die Schweißzange an einer Konsole zu befestigen.

Bei weiteren typischen Ausführungsformen kann auch der erste Zangenarm an oder mit einer Konsole befestigt sein, so dass der gesamte Antrieb mit dem zweiten Zangenarm sich bei Betätigung des Antriebs um den ersten Zangenarm dreht. Dies ist durch die Formulierung, dass sich der erste Zangenarm dreht mit umfasst.

Bei bevorzugten Ausführungsformen ist der Motor unmittelbar mit dem Getriebe verbunden, besonders bevorzugt wird, dass eine Abtriebswelle des Motors in das Getriebe oder in eine erste Getriebestufe des Getriebes hineingreift. Das Getriebe oder eine erste Getriebestufe des Getriebes sind daher vorzugsweise als Koaxialgetriebe ausgeführt.

Der erste Zangenarm ist typischerweise unmittelbar oder mittelbar drehfest mit einem Abtriebselement des Getriebes, beispielsweise einem Zahnträger oder einem Planetenträger verbunden. Dies bedeutet insbesondere, dass keine weiteren Getriebe, Zahnräder oder Zahnriemen zwischengeschaltet sind.

Der erste Zangenarm 11 der Schweißzange 1 weist eine erste Stufe 21 in Richtung der Drehachse 14 in Richtung des Motors 4 auf. Dadurch wird eine Arbeitsebene 25 der Schweißzange 1 gegenüber einer ersten Befestigungsebene 27 des ersten Zangenarmes 11 in Richtung des Motors 4 entlang der Drehachse 14 verschoben.

Der zweite Zangenarm 12 weist keine Stufe auf, ist also stufenlos. Da der zweite Zangenarm 12 an dem mittig angeordneten Flansch 9 befestigt ist, benötigt der zweite Zangenarm 12 keine Stufe. Dies erhöht die Steifigkeit und reduziert den benötigten Bauraum. Die Widerlagerebene 29 fällt im Wesentlichen mit der Arbeitsebene 25 zusammen. "Im Wesentlichen" kann beispielsweise bedeuten, dass der Abstand zwischen der Arbeitsebene 25, in welcher der Arbeitspunkt (nicht dargestellt) liegt, und der Widerlagerebene 29 kleiner ist als die Dicke des zweiten Zangenarmes 12. In dieser Anmeldung sind an anderer Stelle weitere Beispiele für eine Interpretation von "im Wesentlichen zusammenfallen" genannt.

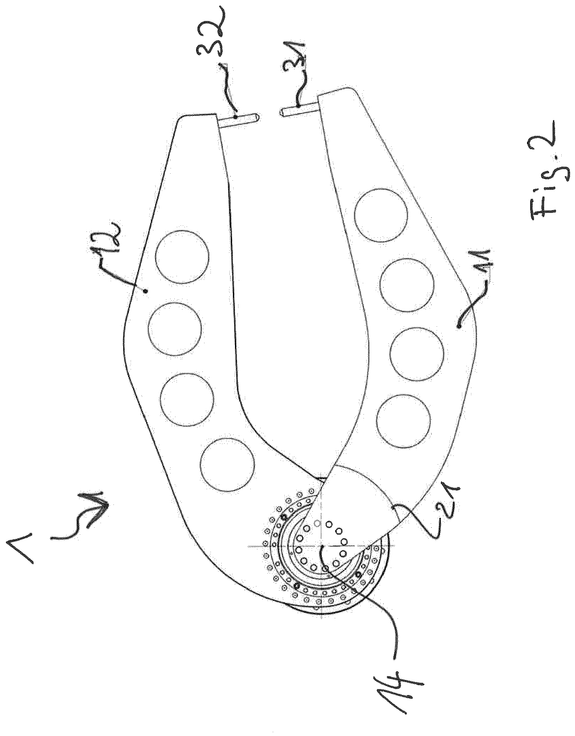

In der Fig. 2 ist die Schweißzange 1 der Fig. 1 schematisch in einer Seitenansicht gezeigt. Zur Beschreibung der einzelnen Teile wird auf die Beschreibung zur Fig. 1 verwiesen. In der Fig. 2 sind zusätzlich eine erste Elektrode 31 und eine zweite Elektrode 32 gezeigt. Die erste Elektrode 31 ist an dem ersten Zangenarm 11 und die zweite Elektrode 32 an dem zweiten Zangenarm 12 befestigt. Die Spitze der zweiten Elektrode 32 bildet dabei den Arbeitspunkt der Schweißzange 1, wobei die Arbeitsebene 25 (Fig. 1) durch die Spitzen der Elektroden 31 und 32 verläuft und in der Ebene der Bewegung der Elektrode 31 liegt. Die Elektrode 31 kann eine Drehbewegung um die Drehachse 14 ausführen, wenn sie durch den Antrieb 2 (Fig. 1) angetrieben wird.

In der Fig. 3 ist schematisch eine Schnittansicht des Antriebs 2 mit Teilen der Schweißzange 1 gezeigt. Wiederum wird auf die Figurenbeschreibungen zu den Fig. 1 und 2 für die Beschreibung vieler Teile, Achsen und Ebenen, welche auch in der Fig. 3 dargestellt sind, verwiesen.

Das Getriebe ist in der Fig. 3 detaillierter als in der Fig. 1, jedoch auch stark schematisch dargestellt. Das Getriebe umfasst ein Planetengetriebe als erste Getriebestufe 6.1 und ein Galaxie-Getriebe als zweite Getriebestufe 6.2.

Das Sonnenrad (nicht gezeigt) des Planetengetriebes ist auf der Motorabtriebswelle 36 des Motors 4 befestigt. Die Motorabtriebswelle 36 bildet somit einstückig auch die Eingangswelle der ersten Getriebestufe 6.1.

Das Galaxiegetriebe weist eine innen liegende Kurvenscheibe (nicht dargestellt) auf, welche auf einer mit dem Abtrieb des Planetengetriebes verbundenen Welle angeordnet ist.

Die Kurvenscheibe weist zwei Ausbuchtungen auf, welche dafür sorgen, dass radial bewegliche Zähne 38 in Eingriff mit einem Innenzahnkranz 40 gelangen. Der Innenzahnkranz 40 ist zwischen zwei Abtriebslagern 42 und 44 des Getriebes 6 angeordnet. Ein äußeres Abtriebslager 42 ist auf der motorabgewandten Seite des Innenzahnkranzes 40 angeordnet, und ein inneres Abtriebslager 44 ist auf der Motorseitigen Seite des Innenzahnkranzes 40 angeordnet.

Der Aufbau der zweiten Getriebestufe 6.2 kann genauer beispielsweise der oben genannten DE 10 2015 105 525 A1 entnommen werden, wobei als Abtriebselement ein Zahnträger 46 dient, welcher die radial beweglichen Zähne 38 aufnimmt. Der erste Zangenarm 11 ist unmittelbar an dem Abtriebselement, welches den Zahnträger 46 umfasst, befestigt. Auf diese Weise wird der erste Zangenarm 11 durch die Abtriebslager 42 und 44 gelagert. Die Arbeitsebene 25 der Schweißzange 1 liegt durch die Stufe 21 Motor-seitig sowohl der Abtriebslagerebene des äußeren Abtriebslagers 42 als auch Motor-seitig der Abtriebslagerebene des inneren Abtriebslagers 44.

Die Erfindung ist nicht auf vorstehend beschriebene Ausführungsbeispiele beschränkt, beispielsweise kann der zweite Arme an einer beliebigen Seite des Antriebs fixiert befestigt sein. Der Umfang der Erfindung wird vielmehr von den Ansprüchen definiert.

### Bezugszeichen

- 1: Schweißzange
- 2: Antrieb
- 4: Motor
- 6: Getriebe
- 6.1: erste Getriebestufe (Planetengetriebe / Planetenvorstufe)
- 6.2: zweite Getriebestufe (Galaxiegetriebe)
- 8: Gehäuse
- 8.1: Motorgehäuseteil
- 8.2: Getriebegehäuseteil
- 9: Flansch
- 11: erster Zangenarm
- 12: zweiter Zangenarm
- 14: Drehachse
- 21: erste Stufe
- 25: Arbeitsebene
- 27: erste Befestigungsebene
- 29: Widerlagerebene
- 31: erste Elektrode
- 32: zweite Elektrode
- 36: Motorabtriebswelle
- 38: Zähne
- 40: Innenzahnkranz
- 42: äußeres Abtriebslager
- 44: inneres Abtriebslager
- 46: Zahnträger

## Patentansprüche

1. Schweißzange (1), insbesondere X- Schweißzange (1) zum Widerstandspunktschweißen, mit
- einem ersten Zangenarm (11),
- einem zweiten Zangenarm (12), und
- einem Antrieb (2) aufweisend einen Motor (4) und ein Getriebe (6) zum Drehen des ersten Zangenarmes (11) relativ zu dem an einem Gehäuse (8) des Antriebs fixiert befestigten zweiten Zangenarm (12) um eine Drehachse (14) der Schweißzange (1),
- wobei der Motor (4) und das Getriebe (6) koaxial in der Drehachse (14) angeordnet sind,
wobei
der zweite Zangenarm (12) in einer Widerlagerebene (29) an dem Gehäuse befestigt ist, welche Motor-seitig einer äußeren Abtriebslagerebene des Antriebs (2) angeordnet ist.

2. Schweißzange (1) nach Anspruch 1, **dadurch gekennzeichnet, dass** das Gehäuse einen zwischen einem Motorgehäuseteil des Gehäuses und einem Getriebegehäuseteil des Gehäuses (8) angeordneten Flansch umfasst, an welchem der zweite Zangenarm (12) befestigt ist.

3. Schweißzange (1) nach einem der vorhergehenden Ansprüche, **dadurch gekennzeichnet, dass** der erste Zangenarm (11) über zumindest ein in der Abtriebslagerebene liegendes Abtriebslager (42, 44) des Getriebes (6) drehbar um die Drehachse (14) gelagert ist.

4. Schweißzange (1) nach einem der vorhergehenden Ansprüche, **dadurch gekennzeichnet, dass** der erste Zangenarm (11) eine Stufe (21) in Richtung der Drehachse (14) aufweist.

5. Schweißzange (1) nach Anspruch 4, **dadurch gekennzeichnet, dass** die Stufe (21) des ersten Zangenarmes (11) einen Versatz bildet, so dass ein Arbeitspunkt und/oder eine Arbeitsebene der Schweißzange (1) Motor-seitig einer Befestigungsebene (27) des ersten Zangenarmes (11) liegt.

6. Schweißzange (1) nach einem der vorhergehenden Ansprüche, **dadurch gekennzeichnet, dass** der zweite Zangenarm (12) stufenlos ausgebildet ist.

7. Schweißzange (1) nach einem der vorhergehenden Ansprüche, **dadurch gekennzeichnet, dass** das Getriebe (6) eine erste Getriebestufe und eine zweite Getriebestufe umfasst.

8. Schweißzange (1) nach Anspruch 7, **dadurch gekennzeichnet, dass** die erste Getriebestufe als Planetenvorstufe ausgebildet ist und/oder die zweite Getriebestufe eine Kurvenscheibe zum Antrieb radial beweglicher Zähne (38) und einen Innenzahnkranz (40) umfasst.

9. Schweißzange (1) nach Anspruch 8, **dadurch gekennzeichnet, dass** der Innenzahnkranz (40) zwischen der äußeren Abtriebslagerebene eines äußeren Abtriebslagers (42) und einer inneren Abtriebslagerebene eines inneren Abtriebslagers (44) des Getriebes (6) angeordnet ist.

10. Schweißzange (1) nach einem der vorhergehenden Ansprüche, **dadurch gekennzeichnet, dass** der Arbeitspunkt der Schweißzange (1) und/oder die Widerlagerebene Motor-seitig einer zur Drehachse (14) senkrechten, durch ein inneres Abtriebslager (44) des Getriebes (6) verlaufenden inneren Abtriebslagerebene liegt.

11. Verwendung einer Schweißzange (1) nach einem der Ansprüche 1 bis 10 zum Schweißen von Blech.
